# EUROPEAN PATENT APPLICATION

(11) **EP 4 279 536 A1**
(43) Date of publication of application: **22.11.2023**
(21) Application number: 23171763.8
(22) Date of filing: 05.05.2023
(51) Int. Cl.: C08G 69/14, B29C 64/153, B33Y 70/00, C08J 3/12

(54) **MATERIALS FOR SELECTIVE LASER SINTERING AND LASER SINTERING USING SUCH MATERIALS**

(30) Priority: 17.05.2022 EP 22173869
(71) Applicant: EMS-CHEMIE AG, 7013 Domat/Ems (CH)
(72) Inventor: WERNER, Daniel, 7012 Felsberg (CH); STEHLE, Christian, 7026 Maladers (CH); JENDE, Lars, 7013 Domat/Ems (CH); ERNST, Alexander, 7152 Sagogn (CH); MOUSSA, Khalil, Rock Hill (US); SHIR, Meisam, Rock Hill (US)
(74) Representative: Bremi, Tobias Hans

(57) **Abstract**

Method for the preparation of moldings in a layer-by-layer process in which selectively areas of a powdered layer are melted, sintered, fused, or otherwise solidified, characterized in that as a powder for the powdered layer a thermoplastic, ground polyamide powder is used, in which the polyamide comprises laurolactam and caprolactam, preferably exclusively, and wherein the proportion of caprolactam is in the range of 40 - 60 mol% of the lactams used.

## Description

### TECHNICAL AREA

The present invention relates to materials for use in powder bed fusion (PBF) technologies such as selective laser sintering (SLS), as well as to methods for the manufacture of such materials, selective PBF processes such as laser sintering processes using such materials and articles prepared using these materials in the SLS process.

### STATE OF THE ART

Powder bed fusion (PBF) technologies is an additive manufacturing process to produce spatial structures by sintering with a laser from a powdered starting material. In this process, unconsolidated loose powder is presented in a container, and the workpiece is successively built up layer by layer by selective irradiation from above with a laser, which irradiates only the areas to be solidified and causes this solidification by melting the material. After irradiation of a layer and its liquefaction and / or solidification, a subsequent layer of powdered starting material is laid out over it and in the next step the desired area in this next layer is melted and, if necessary, solidified and at the same time fused to the underlying molten or already solidified layer.

Specifically, to prepare the molded part, the polymer powder is applied in a thin layer to a lowerable plate of a sintering chamber, which is normally heated to a temperature slightly below the melting point of the polymer. The layer thickness is chosen in such a way that a melting layer is formed during or after the subsequent laser sintering. The laser sinters the powder particles according to the specifications of the controlling computer. After that, the plate is lowered by the amount of the layer thickness, usually 0.05 to 2.0 mm. With the application of a new powder layer, the process is repeated. After the completion of a preselected number of cycles according to the intended number of layers, a block has been formed, which externally consists of powder. Inside, it houses a highly viscous melt or an already largely solidified block in the shape of the desired molded part. Non-melted areas where the powder is still in solid form stabilize the shape of the melt. After that, the block, consisting of powder shell and melt, is slowly cooled, and the melt solidifies when it falls below the solidification temperature of the polymer. It is advantageous if the block is kept at the solidification temperature until the phase transformation is completed. This is achieved by selecting a low cooling rate in the temperature range of the phase transformation, so that the released heat of solidification keeps the molded body inside at exactly at the solidification temperature until the phase transformation is completed. After cooling, the block is removed from the sintering chamber and the molding body is separated from the unsolidfied polymer powder. The powder can be used again for the process.

As described in DE 197 47 309 commonly used polymer powdered for such processes include polyamide 11 (PA 11) or polyamide 12 (PA 12), polyamide 6 (PA 6), but also polyacetals, polypropylene (PP), polyethylene (PE) and ionomers. Polycarbonates (PC) and polystyrene (PS) have also been used.

EP1720930 relates to a copolymer powder, and the use of this powder for non-focused molding processes as well as moldings made from this polymer powder. The forming processes are layer-by-layer processes that use powders, whereby selectively areas of the respective layer are melted by non-focused introduction of electromagnetic energy. Selectivity can be achieved by masks, by applying inhibitors, absorbers, susceptors. The moldings built with the powder according to the processes can be varied compared to moldings from conventional powders with regard to the component properties, especially the mechanical and thermal component properties, in a wide range, depending on the composition. Systems of the construction PA 6/12/66 are effectively worked and an MVR value in the range of 1-12 g/min is prescribed.

EP2274363 relates to a method for reducing the crystallization temperature and the melting temperature of a polyamide powder resulting from the polymerization of at least one major monomer, wherein the reduction of the crystallization temperature is greater than the reduction of the melting temperature process, comprising a step of polymerization of at least one majority monomer with at least one different minority comomer, which is based on the same polymerization method, such that at least one majority monomer has been polymerized, wherein the at least one minority comonomer is selected from aminocarboxylic acids, diamine-diacid pairs, lactams and / or lactones, and wherein the at least one smaller co-monomer 0.1 to 20 % by mass of the total mixture of the / the monomer (s) and co-monomer (s), preferably 0.5, represents to 15 mass% of the total mixture, preferably 1 to 10% by mass of the total mixture. Systems of the type PA 12/6 are used, whereby the proportion of caprolactam must not exceed 20 %.

WO-A-2011124278 relates to a polymer powder for use in a layer-by-layer process in which areas of each powder layer are selectively fused by introducing electromagnetic energy. The polymer powder contains: at least one polyamide of the AB type, prepared by polymerization of lactams having 10 to 12 carbon atoms in the monomer unit or polycondensation of the corresponding aminocarboxylic acids having 10 to 12 carbon atoms in the monomer unit and at least one AABB type polyamide prepared by polycondensation of diamines and dicarboxylic acids, each of which comprises 10 to 14 carbon atoms in the monomer units, the AB-type polyamide contains up to 20 mol% of the AABB comonomer units and the AABB-type polyamide contains up to 20 mol% of the AB monomer units. The invention also relates to a process for preparing such a powder, a layer-by-layer process for producing a molding body from such a powder in which areas of each layer are selectively melted by introducing electromagnetic energy, wherein selectivity is obtained using masks or by applying inhibitors, absorbers or susceptors or focusing the applied energy, and thus prepared moldings.

WO-A-2015009790 describes a part material for printing three-dimensional parts using an additive manufacturing system based on electrophotography, where the part material contains a composition with a semicrystalline thermoplastic material and a charge control agent. The part material is provided in powder form with a controlled particle size and is configured for use in the electrophotography-based additive manufacturing system with a layer transfusion arrangement for printing the three-dimensional parts layer by layer. Although different materials for the powder used are mentioned, concrete systems are not worked.

WO-A-2020064825 relates to a sintered powder comprising a first polyamide component and a second polyamide component, wherein the melting point of the second polyamide component is higher than the melting point of the first polyamide component. The invention further relates to a method for preparing a molding by sintering the sintered powder or by an FFF process (fused filament fabrication) and a molding obtainable by the inventive method. The invention further relates to a process for preparing the sintered powder. Mixtures of aliphatic polyamides with semi-aromatic polyamides are used, whereby polyamide 6 and polyamide 66 are used as aliphatic polyamides.

CN-A-107337793 introduces a copolymerized nylon powder material used for selective laser sintering and a process for its manufacture. The method includes the following steps: performing a copolymerization reaction on a short-chain nylon raw material and a long-chain nylon raw material using a copolymerization reaction principle to obtain copolymerized nylon resin, performing a cryogenic crushing, drying and sieving of the copolymerized nylon resin, and adding a flow aid and an antioxidant to obtain the copolymerized nylon powder material selective laser sintering is used. Systems based on polyamide 1010 as well as polyamide 1212 or polyamide 66 are used.

CN-A-104830053 relates to the field of high-molecular materials and aims to solve a problem of a high industrial cost of nylon 12 in the field of 3D printing. The invention discloses a caprolactam-laurolactam co-polymer modified by glass fibers and a preparation method of a powder thereof, wherein the relative mechanical performances of the obtained polymer are described as follows: tensile strength is 50-65 MPa, elongation at break is 50-300% and water absorption is 2.3-0.4%. The powder is 10-80 [mu]m is particle size. The whole preparation process is free of generation of any toxic and harmful substances such as waste water and waste gas and the like. The preparation method is short in required reaction time, is high in conversion rate and is stable in molecular weight, and is low in cost. The co-polymer powder is excellent in the performances such as thermodynamic properties and size stability, is low in production cost and usage cost, is uniform in particle size and can be used for partially replacing, especially in the field of 3D printing, the nylon 12 at a certain degree.

WO2005082979 relates to a polymer powder comprising a copolymer, to the use of said powder in a shaping method and to molded bodies that are produced from said polymer powder. The shaping methods are methods that operate layer by layer using a powder and during said methods areas of each layer are fused by the focused application of electromagnetic energy. The selectivity of the application of energy can be achieved by focusing a laser beam through suitable lenses or through suitable tubes, cables or optical fibres, without restricting the invention to the use of these materials. Additional focusing can be obtained using suitable mirrors or lenses. Once cooled, the solidified molded bodies can be removed from the powder bed. The component characteristics of the molded bodies that have been produced using the inventive powder according to the inventive method, in particular the mechanical and thermal component characteristics, can be varied within a wide range, depending on their composition in comparison to molded bodies produced from conventional powders. For amorphous copolymers in particular, the flow behavior for the shaping method can be optimized by the skilful selection of comonomers. An additional advantage is that processing can also be simplified by the skilful composition of the copolymer. It is possible to conduct the processing at lower temperatures, which simplifies the temperature control and accelerates said processing. The slower crystallization of semi-crystalline polymers in comparison to semi-crystalline homopolymers promotes the coalescence of the fused particles and leads to improved shrinkage behavior in the molded bodies.

US-B-8097333 provides pre-impregnated composite material (prepreg) that can be cured to form composite parts that have high levels of damage tolerance. The matrix resin includes a thermoplastic particle component that is a blend of particles that have a melting point above the curing temperature and particles that have a melting point at or below the curing temperature.

### DESCRIPTION OF THE INVENTION

It is an object of the present invention to propose a powder for use in a powder bed fusion method, such as, for example, an SLS method of the type described above. The powder bed fusion method can comprise the use of a focused or non-focused input of electromagnetic energy, thermal energy, or other energy to selectively fuse, melt, sinter, or solidify a powder material in an additive manufacturing process. Preferably, the powder is for the production of articles/moldings in a layer-by-layer process in which areas of a powdered layer are selectively melted using focused or non-focused input of electromagnetic energy. Possible are uses in SLS processes but also multi jet fusion (MJF), selected absorption fusion (SAF) or high speed sintering (HSS) processes.

Specifically, a powder is to be provided that has at least one of the following advantageous properties:
- wide range of mechanical and physical properties that are close to those of conventional PP and PA11 systems;
- lower operating temperatures with increased amount of laurolactam, with reduced cooling time and increased recyclability of the product without significantly changing the impact strength of the material. (increased process speed)
- Polyamide with material properties without/with reduced shrinkage and with excellent properties in the Z direction, in contrast to the current market standard;
- Reduction of production costs compared to PA11 materials;
- Possibility of dry mixing of colors within the material to print fully colored parts where the colors do not bleed out.

A powder in accordance with the present invention is defined as a (at room temperature) solid substance reduced to a state of fine, loose particles for example by crushing, grinding, disintegration, precipitation or a combination thereof.

According to a first aspect of the present invention, this relates to a powder of a copolyamide for the preparation of moldings in a layered process in which selectively areas of a powdered layer are
(1) melted by input of electromagnetic energy (typically by a controlled laser),
(2) melted by input of thermal energy from a source other than electromagnetic energy, or
(3) otherwise melted, fused, sintered, or solidified to form an article or object.

Such a powder is characterized according to claim 1, i.e. in that as a powder for the powdery layer a thermoplastic, preferably ground polyamide powder is used, in which the polyamide is composed of, so consists of laurolactam (Lc12) and caprolactam (Lc6), wherein the proportion of laurolactam is 40 - 60 mol% of the lactam used.

The powder thus comprises or consists of a thermoplastic, ground polyamide powder in which the polyamide comprises or consists of laurolactam and caprolactam, and wherein the proportion of caprolactam is 40 - 60 mol% of the lactams used.

In fact it was shown that if the thermoplastic polyamide powder being the basis of the powder consists of laurolactam (Lc12) and caprolactam (Lc6), the above-mentioned advantages surprisingly can be reached.

The powder for the layer-by-layer process in which areas of a powdered layer are selectively melted, sintered, fused, or solidified, preferably by focused or non-focused input of electromagnetic energy, either exclusively consists of the thermoplastic polyamide powder or it may comprise the thermoplastic polyamide powder in a mixture with different powder material. The proportion of the thermoplastic polyamide powder in such a mixture powder is typically at least 50% by weight relative to the total of the powder, preferably it is at least 60% by weight or in a proportion as also detailed further below. The powder material different from the thermoplastic polyamide can for example comprise or consist of powder particles of filler materials (organic or inorganic), flow aid materials, stabiliser materials (including heat stabilisation, optical stabilisation), colourants including pigments or dyes, or a combination thereof either in the form of individual particles or particles of a mixture of such materials. Preferably the particle sizes of such different powder particles are selected in the same or essentially the same range as defined further below for the powder particles of the thermoplastic polyamide powder.

Preferably the powder material different from the thermoplastic polyamide powder as defined above does not include glass fibers or ground glass fibers.

The thermoplastic polyamide powder in that powder in itself may consist of a single thermoplastic polyamide or a mixture of different thermoplastic polyamides, or that thermoplastic polyamide powder may consist of particles made from a mixture of one or a plurality of thermoplastic polyamide types with further additives. Typically, the thermoplastic polyamide powder comprises at least 70% by weight of the thermoplastic polyamide powder comprising laurolactam (Lc12) and caprolactam (Lc6), relative to 100% of the total weight of the thermoplastic polyamide powder. Preferably the additives make up at most 20% by weight or at most 10% or at most 5% by weight relative to 100% of the total thermoplastic polyamide powder. According to one preferred embodiment, the thermoplastic polyamide powder consists exclusively of one or several thermoplastic polyamide systems made exclusively from laurolactam (Lc12) and caprolactam (Lc6) without any additives. Additives can be selected as detailed further below.

Alternatively or additionally, the thermoplastic polyamide powder of the powder is free from flame retardant additives.

According to yet another preferred embodiment, the thermoplastic polyamide powder consists of the polyamide and further additives in an amount of not more than 20 weight% or 15 weight%, preferably in the range of 1-12 weight% or 5-10 weight%, relative to the total weight of the powder.

Preferably the additive is one or a combination of the following; fillers, preferably selected from the group of talc, aluminium oxide-based fillers, glass fillers, metal carbonates including calcium carbonate; flow agents, preferably selected from the group of fumed or precipitated silica, metal salts of long-chain fatty acids, including metal stearates, titanium dioxide, group 1 salts, fumed aluminium oxide; flame retardants, preferably selected from the group of organic or inorganic mono- or diphosphinates, preferably metal alkyl phosphinate, in particular aluminium diethyl phosphinate, alone or in combination with synergist compounds, preferably containing nitrogen and/or phosphorous, including melem, melam, melon or other melamine or derivatives thereof. Preferably the additives do not include glass fibres, or ground glass fibres.

Preferably the powder is free from glass fibres or ground glass fibres.

Preferably the thermoplastic ground polyamide powder is made from starting polyamide material free from glass fibres, which is then ground.

According to the invention, the thermoplastic ground polyamide consists of polyamide made exclusively from laurolactam (Lc12) and caprolactam (Lc6), wherein the proportion of laurolactam is 40 - 60 mol% of the lactam used, so there are no further lactams different from laurolactam (Lc12) and caprolactam (Lc6), and also no further diacids or diamines. According to a further aspect of the present invention, this relates to a method for producing a thermoplastic polyamide powder for use in a process as described above. In one example, the method is characterized in particular in that by means of a suitable filtering or screening technology (tumble airjet screener, ultrasound tumbler or winnower) a grain size distribution suitable for the printing process is achieved. In other examples, the method may not use a screening technology.

Furthermore, in some examples, the method includes forming a thermoplastic polyamide powder using solvent precipitation, solvent pulverization, melt emulsification, melt pulverization, or another micronization technique. In addition, in some embodiments, it is possible to prepare a composition for use in additive manufacturing by blending the polyamide powder with one or more additional components or additives, such as an additive or filler. Such a composition can be prepared, in some examples, by dry blending or wet blending.

According to a further aspect, the present invention describes powders or compositions for use in additive manufacturing, such as SLS or another additive manufacturing method in which a granular or particulate material is melted, fused, sintered, or otherwise solidified in a selective manner. In some embodiments, such a composition comprises as a component a polyamide powder described herein. The polyamide powder may form all or part of a sinterable powder. In some cases, the polyamide powder is the primary or majority component of a sinterable powder composition. For instance, in some embodiments, a composition for additive manufacturing described herein comprises up to 100 wt. %, up to 99 wt. %, up to 95 wt. %, or up to 90 wt. % copolyamide powder, based on the total weight of the sinterable powder. In some instances, the sinterable powder comprises 50-100 wt. %, 50-99 wt. %, 50-90 wt. %, 50-80 wt. %, 50-70 wt. %, 60-100 wt. %, 60-99 wt. %, 60-90 wt. %, 70-100 wt. %, 70-99 wt. %, 70-90 wt. %, 80-100 wt. %, 80-99 wt. %, 80-95 wt. %, 85-100 wt. %, 85-99 wt. %, 85-95 wt. %, 90-100 wt. %, or 90-99 wt. % copolyamide powder, based on the total weight of the sinterable powder. In some cases, the sinterable powder further comprises another granular, particulate, or powder component, in addition to the copolyamide powder component. Again, preferably the other granular, particulate, or powder component from the thermoplastic polyamide powder as defined above does not include glass fibers or ground glass fibers.

According to a preferred embodiment, in the thermoplastic, ground polyamide powder, the proportion of caprolactam is at least 50 mol% of the lactams used, preferably in the range of 50-60 mol% of the lactams used.

The thermoplastic, ground polyamide powder preferably has a relative viscosity (measured in m-cresol at a temperature of 20 °C and a concentration of 0.5 wt.-% according to ISO 307) in the range of 1.4-1.8, preferably in the range of 1.5-1.75.

The thermoplastic, ground polyamide powder further preferably has a melting point in the range of 110-190 °C, preferably in the range of 120-180 °C.

The thermoplastic, ground polyamide powder may have neither a recrystallization temperature nor a cold crystallization temperature. For the cold crystallization temperature (T_{cc}) the peak value during a second heating cycle is taken; for the recrystallization temperature (T_{rc}) the value taken during the cool-down phase of the first heating cycle is recorded, all measured in accordance with ISO 11357-3 (2013).

Typically, the powder is suitable and adapted for the production of moldings in a layer-by-layer process in which areas of a powdered layer are selectively melted using focused or non-focused input of electromagnetic energy.

According to a preferred embodiment, in the thermoplastic, ground polyamide powder the proportion of caprolactam is in the range of 40-60 mol%, preferably 50-60 mol%, of the lactams used, the melting point is in the range of 120-170 °C, preferably in the range of 125-170 °C, and the crystallization temperature in the range of 100-140 °C, preferably in the range of 90-160 °C, and wherein the polyamide powder is prepared without chain control.

According to yet another preferred embodiment, the proportion of caprolactam is in the range of 40-60 mol%, preferably 50-60 mol%, of the lactams used, the melting point in the range of 150-200 °C, preferably in the range of 155-195 °C, and the crystallization temperature in the range of 110-170 °C, preferably in the range of 120-165 °C, and wherein the polyamide powder is prepared without chain control.

The powder preferably has neither a recrystallization temperature (T_{rc}) nor a cold crystallization temperature (T_{cc}) resulting in a wide possible temperature range for the part bed temperature. If neither T_{rc} nor T_{cc} can be measured by DSC, this indicates a very slow crystallization of the powder in a wide temperature range, which also tolerates a wide temperature range during printing. This allows for more robust printing parameters.The thermoplastic, ground polyamide powder can be prepared by a grinding process, preferably by using a cryo grinding process. The grinding is preferably followed by a sieving or filtering process for generating a desired particle size distribution.

If needed for the preparation of the final powder the thermoplastic polyamide powder may be mixed with different powder particles as detailed further above. The above-mentioned particle size filtering may take place before mixing with the different powder particles or after or both.

Preferably the particle size distribution is such that 80%, preferably 90%, of the particles are located within a range of sizes of 20-100 µm, preferably in the range of 40-90 µm. Preferably, the value of D10 measured according to ISO 13322-2 is in the range of 15-40 µm, preferably in the range of 20-30 µm, and/or the value of D95 measured according to ISO 13322-2 is in the range of 80-99 µm, preferably in the range of 85-98 µm.

Typically, the powder has a diameter D50 measured according to ISO 13322-2 of 50-75 µm, preferably 50-65 µm, more preferably 50-60 µm.

The particles preferably have an essentially spherical or potato shape.

The thermoplastic, ground polyamide powder may preferably have an MFR value, measured according to ISO 1133, in the range of 7-12 g / 10min.

Furthermore, the present invention relates to a copolyamide composed of laurolactam and caprolactam, wherein the proportion of caprolactam is 40 - 60 mol% of the lactams used, for preparing a powder as detailed above.

Further the present invention relates to a use of a thermoplastic, ground polyamide powder in which the polyamide is composed of or comprises laurolactam and caprolactam, preferably exclusively, and wherein the proportion of caprolactam is 40 - 60 mol% of the lactams used, for the preparation of moldings in a layer-by-layer process in which selective areas of a powdered layer are fused, sintered, melted, or solidified, preferably using focused or non-focused input of electromagnetic energy.

Also the present invention relates to a method for preparing a thermoplastic polyamide powder for use in a layer-by-layer process in which selective areas of a powdered layer are sintered, melted, or solidified, preferably melted by focused or non-focused input of electromagnetic energy, wherein the powder is a thermoplastic, ground polyamide powder in which the polyamide of comprises or consists of laurolactam and caprolactam, preferably exclusively, and wherein the proportion of caprolactam is in the range of 40 - 60 mol% of the lactams used, wherein preferably the thermoplastic, ground polyamide powder is prepared by cryo grinding process.

Further the invention relates to a method of printing a three-dimensional article comprising: providing a composition comprising a powder as detailed above; and selectively solidifying layers of the composition to form the article, preferably using focused or non-focused input of electromagnetic energy. Preferably the composition is provided in a layer-by-layer process.

In some embodiments, for example, a composition for additive manufacturing described herein comprises a flow aid component.

Last but not least, the present invention relates to a molded body prepared using a method as described above, or a molded body prepared from or formed from a composition or powder described above.

Further embodiments are given in the dependent claims.

### DESCRIPTION OF PREFERRED EMBODIMENTS

Preferred embodiments of the invention are described below on the basis of the embodiments, which serve only as an explanation and are not to be interpreted restrictively. According to the invention, the condensation reaction as well as the grinding process and the use are explained.

### Step A - Copolyamide:

Caprolactam (40.2 kg, 56 mol%) and laurolactam (53.7 kg, 44 mol%) were transferred with water (3.95 wt.%) to an autoclave where the mixture was stirred at 190-200 °C for 120 minutes. The mixture was then heated to 270 °C and 20 bar, and stirred under constant pressure of 20 bar for 5 hours at 290 °C. Over 4 hours, the polymer was cooled to 270 °C and the pressure was reduced to 0.3 bar. The temperature was subsequently reduced to 260 °C. The polycondensate was then granulated and dried in a standard procedure. Analytics of the granulate: Melting point Tₘ of 130 °C and glass transition temperature T_{g} of 30 °C.

### Step B - Powder:

The granules obtained from step A were ground with the addition of liquid nitrogen in the counter run with a pin mill of the type Hosokawa 160C at -50 °C, to the raw ground material. Subsequently, the raw ground material was separated with an ultrasonic sieve to the grain size distribution of approximately 40-90 µm, using, screen fabrics of according mesh size are used.

Measured grain size distribution (µm): D10: 24.4 D50: 52.9 D95: 95.3, as determined on Camsizer XT according to ISO 13322-2. Further properties of the powder are given in the table below.

### Step C: SLS Moldings

The powder obtained from step C was printed for the production of test bodies (ISO 527) using an SLS printer SPro60 from 3D Systems (equipped with a CO2 Laser).

The printer was set with the parameters given in the table below:

| | Example 1 | PP (Prodways PM 1200) | PA11 (Duraform PA EX-Nat) | PA12 EMS-CHEMIE AG |
|---|---|---|---|---|
| Lc6/Lc12 Ratio | 56/44 | - | - | 0/100 |
| Tₘ / °C (ISO 11357) | 120-135 | 130-140 | 180-205 | 170-180 |
| T_{g} / °C (ISO 11357) | 34 | - | 37 | 40 |
| T_{cc} / °C (ISO 11357) | - | - | - | 101 |
| T_{rc} / °C (ISO 11357) | - | 70-90 | 135-160 | 144 |
| Warm up duration | 8 mm (45 minutes) | 10 mm (1 hour) | 17 mm (2 hours) | 10 mm (1 hour) |
| Part bed temperature | 122→7120 | 135→7132 | 187 | 173.5→172 |
| Left/Right Temperature | 90 | 115 | 135 | 142 |
| Laser Parameter: | | | | |
| Fill Laser Power (W) | 60 | 35 | 40 | 40 |
| Outline Laser Power (W) | 25 | 7 | 8 | 8 |
| Slicer Fill Scan Spacing (mm) | 0.20 | 0.15 | 0.15 | 0.15 |
| Flowability | Excellent | Good | Excellent | Excellent |
| Cracks/Warpage/Curling | None | At the edges | Visible | None |
| Cool down mm (time) | 2.54 (16 hours) | 2.54 (16 hours) | 2.54 (16 hours) | 2.54 (16 hours) |
| Viscosity after print: | 1.752 | n.d. | 2.135 | n.d |
| Viscosity after 4 prints(0% refresh) | 1.766 | n.d | n.d | n.d |

| | | | | |
|---|---|---|---|---|
| n.d: not determined; -: not indicated because no signal or signal too weak; | | | | |

**Relative viscosity** of the residual powder was measured in m-cresol at a temperature of 20 °C and a concentration of 0.5 wt.-% according to ISO 307.

**Tensile modulus** was measured according to ISO 527 with a pulling speed of 1 mm/min ISO tension rod, standard: ISO/CD 3167, type A1, 170 x 20/10 x 4 mm at a temperature of 23 °C.

**Tensile strength** and **elongation at break were measured** according to ISO 527 with a tensile speed of 5 mm/min ISO tension rod, standard: ISO/CD 3167, type A1, 170 x 20/10. x 4 mm, temperature 23 °C

**Impact strength** was measured according to ISO 179/*eA on ISO test bars according to standard: ISO/CD 3167, type B1, 80 x 10 x 4 mm at 23 °C.

**Glass transition temperature (T_{g}), melting point (Tₘ) measured on pellets/granulate:** ISO standard 11357-1, 11357-2, 11357-3 (2013); pelletized material; the differential scanning calorimetry (DSC) was carried out using a DSC 2920 instrument from TA Instruments with a heating rate of 20 K/min and a cooling rate of 5 K/min. The thermogram was analysed using the Universal Analysis 2000 program from TA Instruments. The sample was quenched in dry ice after the first heating run for the purpose of determining the glass transition temperature. The glass transition temperature (Tg) was determined on the second heating run. The midpoint of the glass transition range, which was reported as the glass transition temperature (Tg), was ascertained by the "half-height" method.

**Glass transition temperature (T_{g}), melting point (Tₘ), cold crystallization temperature (T_{cc}), recrystallization temperature (T_{rc}) measured on powdered material:** ISO standard 11357-1, 11357-2, 11357-3 (2013); Powdered material; the differential scanning calorimetry (DSC) was carried out using a DSC 2920 instrument from TA Instruments with a heating rate of 20 K/min and a cooling rate of 5 K/min. The thermogram was analysed using the Universal Analysis 2000 program from TA Instruments.

The sample was quenched in dry ice after the first heating run for the purpose of determining the glass transition temperature. The glass transition temperature (T_{g}) was determined on the second heating run. The midpoint of the glass transition range, which was reported as the glass transition temperature (T_{g}), was ascertained by the "half-height" method.

For the cold crystallization temperature (T_{cc}) the peak value during a second heating cycle is taken; for the recrystallization temperature (T_{rc}) the value taken during the cool-down phase of the first heating cycle is recorded.

| Mechanical properties | | | | |
|---|---|---|---|---|
| Polymer according to: | Example 1 | PP | PA11 | PA12 |
| Tensile modulus (MPa) | 1312 | 1273 | 1355 | 1879 |
| Tensile strength (MPa) | 39.3 | 28 | 42.8 | 50.3 |
| Elongation at break (%) | 30.9 | 15.3 | 18.6 | 9.4 |
| Charpy impact strength (kJ/m²) | 72.4 | 30.1 | 111 | 13.4 |
| Charpy notched impact strength (kJ/m²) | 20.1 | n.d | 50.3 | n.d |
| Part colour | White/Natural | White | Natural | White/Natural |
| Surface finish | Smooth | Rough | Rough | Smooth |

| | | | | |
|---|---|---|---|---|
| n.d: not determined | | | | |

The powder according to the invention is a material that can be printed at relatively low, energy-efficient temperatures while providing very good mechanical properties, in particular with regard to impact strength and elongation at break when compared with other commonly-printed SLS powders PP and PA11 as well as the PA12. Good surface appearance is also achieved in prints involving the inventive powder.

For the powder according to the invention no T_{cc} and T_{rc} can be measured, which provides for a large sintering window/temperature range for 3D printing. The two comparative examples PP and PA11 have a peak in the DSC measurement to read a range of 20 and 25°C, respectively, for the sinter window, which is defined as the window (Tₘ-T_{rc}) between the melting temperature Tₘ and the recrystallization temperature T_{rc}.. In example 1 according to the invention, on the other hand, the crystallization is so slow that this peak is no longer detected, so there is a wide range of the crystallization temperature. The comparative system PA12 with the sintering window according to the above definition of about 30°C has only an effectively usable temperature window of 5°C of the powder bed during printing. The powder according to the invention according to example 1 has an effectively usable temperature range twice as wide (about 10°C) but no measurable sintering window.

## Claims

1. Powder for the production of moldings in a layer-by-layer process in which areas of a powdered layer are selectively melted, sintered, fused, or solidified,
wherein
the powder is a thermoplastic, ground polyamide powder in which the polyamide consists of laurolactam and caprolactam, and wherein the proportion of caprolactam is 40 - 60 mol% of the lactams used.

2. Powder according to claim 1, wherein in the thermoplastic, ground polyamide powder the proportion of caprolactam is at least 50 mol% of the lactams used, preferably in the range of 50-60 mol% of the lactams used.

3. Powder according to any one of the preceding claims, wherein the thermoplastic, ground polyamide powder has a relative viscosity (measured in m-cresol at a temperature of 20 °C and a concentration of 0.5 wt .-% according to ISO 307) in the range of 1.4-1.8, preferably in the range of 1.5-1.75,
and/or wherein the thermoplastic, ground polyamide powder has a melting point in the range of 110-190 °C, preferably in the range of 120-180 °C
and/or wherein the thermoplastic, ground polyamide powder has a crystallization temperature in the range of 80-170 ° C, preferably in the range of 90-160 °C.

4. Powder according to any one of the preceding claims for the production of moldings in a layer-by-layer process in which areas of a powdered layer are selectively melted using focused or non-focused input of electromagnetic energy.

5. Powder according to any one of the preceding claims, wherein in the thermoplastic, ground polyamide powder the proportion of caprolactam is in the range of 40-60 mol%, preferably 50-60 mol%, of the lactams used, the melting point is in the range of 120-170 ° C, preferably in the range of 125-170 °C, and the crystallization temperature in the range of 100-140 ° C, preferably in the range of 90-160 °C, and wherein the polyamide powder is prepared without chain control.

6. Powder according to any one of the preceding claims, wherein the proportion of caprolactam is in the range of 40-60 mol%, preferably 50-60 mol%, of the lactams used, the melting point in the range of 150-200 °C, preferably in the range of 155-195 °C, and the crystallization temperature in the range of 110-170 °C, preferably in the range of 120-165 °C, and wherein the polyamide powder is prepared without chain control.

7. Powder according to any one of the preceding claims, wherein the powder has neither a recrystallization temperature nor a cold crystallization temperature.

8. Powder according to any one of the preceding claims, wherein the thermoplastic, ground polyamide powder is prepared by cryogrinding process.

9. Powder according to any one of the preceding claims, **characterized in that** the powder has a diameter D50 measured according to ISO 13322-2 of 50-75 µm, preferably 50-65 µm, more preferably 50-60 µm,

10. Powder according to any one of the preceding claims, wherein the thermoplastic, ground polyamide powder has an MFR value, measured according to ISO 1133, in the range of 7-12 g / 10min.

11. Copolyamide composed of laurolactam and caprolactam, wherein the proportion of caprolactam is 40 - 60 mol% of the lactams used, for preparing a powder according to one of the preceding claims.

12. Use of a thermoplastic, ground polyamide powder in which the polyamide comprises laurolactam and caprolactam, preferably exclusively, and wherein the proportion of caprolactam is 40 - 60 mol% of the lactams used, for the preparation of moldings in a layer-by-layer process in which selective areas of a powdered layer are fused, sintered, melted, or solidified, preferably using focused or non-focused input of electromagnetic energy.

13. A method for preparing a thermoplastic polyamide powder for use in a layer-by-layer process in which selective areas of a powdered layer are sintered, melted, or solidified, preferably by focused or non-focused input of electromagnetic energy, wherein the powder is a thermoplastic, ground polyamide powder in which the polyamide comprises or consists of laurolactam and caprolactam, preferably exclusively, and wherein the proportion of caprolactam is in the range of 40 - 60 mol% of the lactams used, wherein preferably the thermoplastic, ground polyamide powder is prepared by cryo grinding process.

14. A method of printing a three-dimensional article comprising:
providing a composition comprising a powder according to any of claims 1-9; and
selectively solidifying layers of the composition to form the article, preferably using focused or non-focused input of electromagnetic energy, wherein preferably the composition is provided in a layer-by-layer process.

15. Moulded body prepared using a method as defined in claim 13 or 14.
